# EUROPEAN PATENT SPECIFICATION

(11) **EP 3 504 095 B1**
(45) Date of publication and mention of the grant of the patent: **24.11.2021**
(21) Application number: 17844456.8
(22) Date of filing: 24.08.2017
(51) Int. Cl.: B61B 9/00, B61B 13/12, B61B 12/00, B61B 12/12

(54) **RAIL TRANSPORTATION SYSTEM**
SCHIENENTRANSPORTSYSTEM
SYSTÈME DE TRANSPORT FERROVIAIRE

(30) Priority: 25.08.2016 US 201662379703 P
(43) Date of publication of application: 03.07.2019
(73) Proprietor: Kinkead, Jordan, Kentfield, CA 94904 (US)
(72) Inventor: Kinkead, Jordan, Kentfield, CA 94904 (US)
(74) Representative: Cabinet Chaillot
(86) International application number: PCT/US2017/048511
(87) International publication number: WO 2018/039507

(56) References cited:
- FR-A1- 2 207 050
- US-A- 362 634
- US-A- 3 871 303
- US-A- 4 092 929
- US-A- 4 848 241
- US-A- 5 419 261
- US-A- 5 517 923
- US-A1- 2010 180 792
- US-B1- 6 182 577
- US-B2- 8 418 625

## Description

### CROSS-REFERENCE TO RELATED APPLICATIONS

This patent application claims the benefit of the filing date of U.S. Provisional Patent Application Serial Number 62/379,703 for "HIGH SPEED TRANSPORTATION SYSTEM" filed on August 25, 2016.

### FIELD OF THE INVENTION

The present invention relates to the field of transportation systems, such as, for example, high volume, high speed rail transportation systems with vehicles operating at, for example, 120 mph (190 km/h) or faster, as well as lower speed rail transportation systems with vehicles operating at less than 120 mph (190 km/h), for example, 30-80 mph (50-130 km/h).

### BACKGROUND OF THE INVENTION

There is no admission that the background art disclosed in this section legally constitutes prior art.

Currently, rail travel consists of train engines, such as locomotives, pulling or pushing rail cars. A conventional rail car may weigh over 100,000 pounds (45,000 kg), and the locomotive may weigh 200,000 pounds (90,000 kg) or more. Thus, a typical train consisting of a locomotive and eight cars may weigh in excess of 1,000,000 pounds (450,000 kg). Such weight necessitates a supporting infrastructure that is both heavy and expensive to build and maintain.

Conventional train systems also have certain inefficiencies regarding fuel economy. One inefficiency is that a conventional train must not only provide power through a diesel or electric motor to move the cars, but must also provide power to move the source of the power, for example, to move the locomotive. Another inefficiency exists because a great deal of energy is used to start and stop the entire set of train cars each time it leaves from or arrives at a station, even if only a few passengers are embarking or disembarking from the train.

Moreover, because the coefficient of friction between the locomotive's steel wheels and the steel rails is small, the locomotive must be quite heavy (in relation to the cars) in order to provide sufficient traction to move itself and the train cars. Furthermore, because conventional trains must make many stops, the train must be designed to travel at a higher speed to meet a desired average speed. For example, there are conventional high speed rail systems that are designed for and travel at speeds of over 200 mph (320 km/h) so that with all of the required stops, the train can move at an average speed of around 130 mph (210 km/h). Similarly, conventional commuter rail systems may have a top speed of approximately 75 mph (120 km/ h), but an average speed of only 35 mph (50 km/h) when stops are included. Also, if a conventional train is involved in an accident, it can and often does involve many cars and, therefore, may endanger several hundred passengers. Another drawback relates to the significant amount of noise pollution that high speed trains create when traveling at speeds in excess of 200 mph (320 km/h), particularly when those trains are exiting tunnels.

Additionally, conventional rail systems require that each train be designed for specific speeds and operating conditions. For example, high speed trains designed to operate at or over 120 mph (190 km/ h) must have larger and more powerful motors than commuter trains designed to operate at approximately 75 mph (120 km/h). Similarly, commuter trains must have larger and more powerful motors than light rail trains, streetcars, or trams designed to operate at lower speeds, such as approximately 30 mph (48 km/ h). Because those different train designs do not typically share the same segments of track, rail travel often requires passengers to stop and change trains. For example, a passenger traveling from the urban center of a large city to a suburb of a different city might board a high speed train to travel between the two cities, then transfer to a commuter train to travel to the suburban center, and finally transfer to a light rail train to reach their destination within the suburban area.

Conventional rail systems are also expensive to build and maintain because they are typically constructed with a ballast foundation (e.g., compacted gravel or rocks), railroad ties embedded in the ballast, and steel rails that rest upon and are affixed to the railroad ties. Engineering and construction of the track, therefore, must be performed "in the field" and built in accordance with the local terrain. Prefabrication of components, and the resulting economies of scale, are limited to production of the individual ties and rails; whole railroad track segments are not currently prefabricated. Further, conventional track designs require ongoing maintenance and expense because the forces of passing trains cause the ballast to shift over time, necessitating regular rebuilding of the ballast foundation and realignment of the ties and rails.

Further, conventional rail systems are limited in the amount of grade that the locomotive can traverse, thus requiring designs that maximize the amount of level tracks. Typically, designs around steep grades (e.g., a mountain pass) involve building additional track to go around the obstruction or a tunnel to pass through the obstruction, with both options adding significant costs to the system.
US 3 871 303 A discloses a rail transportation system according to the preamble of claim 1.

The invention is defined by the features of independent claims 1 and 20. Dependent claims 2 to 19 disclose preferred embodiments of the invention.

### BRIEF DESCRIPTION OF THE DRAWINGS

In order to better understand the invention and to see how it may be carried out in practice, non-limiting preferred embodiments of the invention are described with reference to the accompanying drawings, in which:
FIG. 1 is a pictorial diagrammatic view of a rail transportation system which is constructed in accordance with an embodiment;
FIG. 2 is a side view of one of the plurality of vehicles of the transportation system of FIG. 1;
FIG. 3 is a diagrammatic view of a propulsion segment assembly for the transportation system of FIG. 1;
FIG. 4 is a top sectional view of a cable assembly and a cable support apparatus in accordance with an embodiment;
FIG. 5A is a rear cutaway view of a support structure for the cable assembly and cable support apparatus of FIG. 4;
FIG. 5B is a side cutaway view of the support structure of FIG. 5A;
FIG. 6 is a side cutaway view of a vehicle connector assembly and a cable support apparatus in accordance with an embodiment;
FIG. 7 is a rear cutaway view of a vehicle connector assembly in accordance with another embodiment;
FIG. 8 is a side cutaway view of the vehicle connector assembly of FIG. 7;
FIG. 9 is a top diagrammatic view of multiple secondary stations in accordance with an embodiment of the transportation system of FIG. 1;
FIG. 10 is a top diagrammatic view of multiple stations and tracks in accordance with another embodiment of the transportation system of FIG. 1;
FIG. 11A is a top view of a road vehicle loading system in accordance with an embodiment of the transportation system of FIG. 1;
FIG. 11B is a side view of the road vehicle loading system of FIG. 11A;
FIG. 12A is a side view of the cargo transport vehicle of FIGS. 11A-B;
FIG. 12B is a side view of the road vehicle transport platform of FIGS. 11A-B; and
FIG. 12C is another side view of the road vehicle transport platform of FIGS. 11A-B.

### DETAILED DESCRIPTION OF CERTAIN EMBODIMENTS OF THE INVENTION

Certain embodiments of the present invention are described more fully hereinafter with reference to the accompanying drawings, in which some, but not all, embodiments of the invention are shown. Embodiments of the invention may be in many different forms and thus the invention should not be construed as limited to the embodiments set forth herein. Rather, those embodiments are provided as illustrative examples only so that this disclosure will satisfy applicable legal requirements. Like numbers refer to like elements throughout.

It will be readily understood that the components of the embodiments as generally described and illustrated in the drawings herein, could be arranged and designed in a wide variety of different configurations. Thus, the following more detailed description of the certain embodiments of the system, components, and method of the present invention, as represented in the drawings, are not intended to limit the scope of the invention as claimed, but merely representative as being of the embodiment of the invention.

The transportation system of the present invention includes a propulsion segment assembly for transporting vehicles over rails. The propulsion segment assembly may include a cable assembly that is looped between a propulsion cylinder and a free cylinder. The rail transportation system of the present invention may also involve a lighter infrastructure and lower cost than conventional transportation systems.

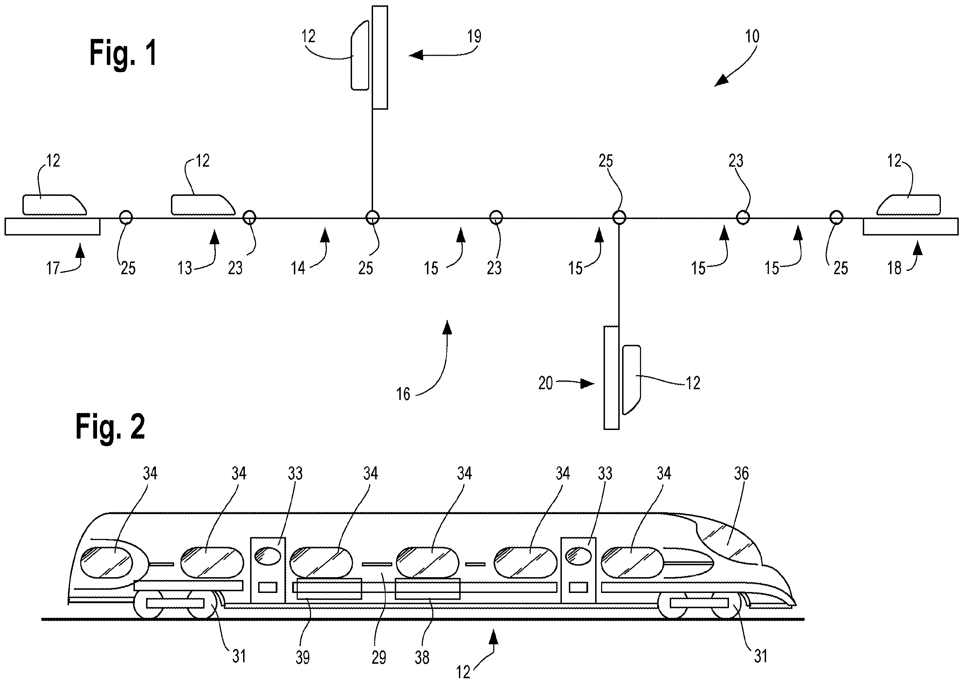

Referring now to the drawings, and more particularly to FIG. 1 thereof, there is shown a pictorial view of a rail transportation system 10, which is constructed in accordance with an embodiment. The transportation system 10 includes one or more propulsion segment assemblies, such as propulsion segment assembly 13 operationally coupled to a load station 17 for transporting a vehicle 12 over rails. The propulsion segment assembly 13 is also operationally coupled to a second propulsion segment assembly 14, which is substantially similar to propulsion segment assembly 13. Propulsion segment assembly 14 is further coupled to additional propulsion segment assemblies 15 to form a propulsion system 16. The additional propulsion segment assemblies 15 are substantially similar to propulsion segment assembly 13.

At the opposite end from the first load station 17, the propulsion system 16 is operationally coupled to a second load station 18, which is substantially similar to the first load station 17 and may also be located in a large city for example. The transportation system 10 may include the propulsion system 16 that is designed to propel the vehicle 12 between the first load station 17, the second load station 18, a third load station 19, and a fourth load station 20 over a mainline rail track and a station rail track. Further, each of the propulsion segment assemblies may be connected to each other through a segment transition zone 23 in order to form the propulsion system 16. The segment transition zones 23 are zones of travel for the vehicles that link one propulsion segment assembly with another propulsion segment assembly. Because the seamless movement of the vehicle 12 between each of the propulsion segment assemblies, the rail system 10 operates as a continuous track. In an embodiment, the vehicle 12 may switch tracks, for example, from the mainline rail track to a station rail track, at any point along propulsion system 16, including at a midpoint along a propulsion segment assembly.

The load stations 17, 18, 19, and 20 may be similar to one another in that all of the load stations provide access for the loading and unloading of passengers and other cargo. In an embodiment, the load stations 17, 18, 19, and 20 may be around 100 feet (30 m) in length which corresponds to an approximate length of a vehicle 12 and which is long enough to allow an individual vehicle to embark and disembark passengers. Because the rail transportation system 10 provides for flexible transportation of individual vehicles 12, the vehicles may wait in a load station for an extended time period, for example 15 minutes, while passengers that are proceeding to a specific destination embark on the vehicle along with their luggage at a less rushed pace than conventional systems.

Each of the load stations 17, 18, 19, and 20 are connected to the propulsion system 16 through a load station transition zone 25. The load station transition zones 25 are zones of travel for the vehicles that link a segment assembly with tracks leading to a load station for passengers. In operation, the vehicles 12 may be scheduled to travel from one particular load station to another load station. For example, a passenger may start out by embarking on a vehicle 12 at the first load station 17 that is scheduled to travel through the propulsion system 16 to the second load station 18, the third load station 20, or the fourth load station 21. Upon reaching the destination load station, the passenger can disembark from the vehicle 12 and continue on to their final destination via other modes of transportation such as via walking, bicycle, automobile, taxi, or bus.

In an embodiment, load stations 17 and 18 may be located in a large city while load stations 19 and 20 may be located in smaller cities or towns. Conventional passenger rail systems require the entire train to stop and restart at each station whether or not all passengers need to embark or disembark. In contrast, the rail transportation system 10 allows a passenger to travel from station 17 to station 18, station 19, or station 20 directly. Further, a passenger traveling from station 17 to station 18 is not required to stop at either station 19 or station 20 to pick up or drop off additional passengers. The scheduling for the rail transportation system 10 provides for more selective loading, scheduling, and stopping of individual vehicles 12 at stations in order to maximize efficiency in terms of time and energy for the system and the passengers.

Further, conventional rail systems typically travel at an average speed that is much lower than their maximum capable speed. Conventional systems must be designed for higher speeds than their average speed, such as, for example, 200 mph (320 km/h) to account for all of the many stops and sections of travel where the train must proceed at a slower speed than its maximum. Because the rail transportation system 10 requires that only the specific vehicle 12 that reaches a desired destination to exit and stop, the rail transportation system 10 may be designed to have a lower top end speed than that of conventional systems. In an embodiment, the rail transportation system 10 provides a system where the typical vehicle may only have a top end speed of around 120-125 mph (190-200 km/h), which uses considerably less energy than conventional systems that may travel at around 200 mph (320 km/h). But because of the increased efficiencies of the rail transportation system 10 during operation, vehicles 12 may reach their destination in the same or faster average speed as conventional trains. In other embodiments, vehicle 12 may have a top end speed of greater than 125 mph (200 km/ h) for even faster travel than conventional systems, or vehicle 12 may travel at lower speeds, e.g., 75 mph (120 km/h) on a track designed for commuter rail speeds or 30 mph (48 km/h) on a track designed for light rail, streetcar, or tram use. In an embodiment, individual propulsion segment assemblies may each have different top speeds. For example, propulsion segment assemblies on the mainline rail track may have a higher top speed than smaller branch lines.

In the embodiment shown in FIG. 1, each of the propulsion segment assemblies may be approximately 5 miles (8 km) in length. In this example, there are a total of six propulsion segment assemblies coupled between the load station 17 and the load station 18, which provides a total distance of the propulsion system 16 that is approximately 30 miles (48 km). In other embodiments, any number of propulsion segment assemblies may be coupled together in order to provide a system 10 that spans greater distances. In other embodiments, each propulsion segment assembly may be longer or shorter than 5 miles (8 km) and various different lengths of propulsion segment assemblies may be used in the same rail system 10 as required to accommodate engineering, technical, or cost considerations.

Referring now to FIG. 2, there is shown a vehicle 12 in accordance with an embodiment. The vehicle 12 is aerodynamic in form and may include a main body 29 that has one or more sets of wheels 31 for rolling on train tracks. The vehicle 12 may also include one or more doors 33 for allowing passengers to enter and exit the vehicle 12. The vehicle may include one or more side windows 34 and a cab window 36 may be located at either or both ends of the vehicle 12. The vehicle 12 may also have an onboard generator 38 that is coupled to the axles of the vehicle 12 so that electric power may be produced by the generator 38 when the axles are turning. The energy created by generator 38 can then be used to power ancillary components such as brakes, lighting, or HVAC systems for the vehicle 12 or charge batteries, capacitors, or other energy storage devices onboard vehicle 12.

In an embodiment, the vehicle 12 may weigh approximately 35,000 pounds (16,000 kg), have a length of approximately 80 feet (24 m), and have a height above the rails of approximately 11 feet (3.4 m). The vehicle 12 may have the capacity to carry up to approximately 100 passengers and their luggage. In addition, the vehicle 12 may include numerous amenities such as plush seating for all passengers, food, bathrooms, tables, and communications equipment and services. In an embodiment, the vehicle 12 may include a motor 39 that can accelerate the vehicle 12 up to around 10-20 mph (16-32 km/h) when leaving a station until engaging an accelerating system in a load station transition zone 25. The accelerating system normally remains at rest or at a low speed (e.g., the 10-20 mph (16-32 km/h) speed of vehicle 12 traveling under its own power with motor 39). In embodiments where the accelerating system remains at rest when it is not accelerating a vehicle 12, when a vehicle 12 approaches, the accelerating system turns on and initially reaches a speed that matches the slow speed of the approaching vehicle (e.g., 10-20 mph or 16-32 km/h). Once vehicle 12 engages the accelerating system, the accelerating system accelerates itself and vehicle 12 up to a speed somewhat higher than the mainline track to allow the vehicle to coast onto and engage the mainline track. For example, for a mainline track operating at 120 mph (190 km/h), the accelerating system will accelerate itself and vehicle 12 up to approximately 125 mph (200 km/h) in order to allow vehicle 12 to coast onto and engage a mainline track. The accelerating system then slows to its prior low speed (or to rest) after vehicle 12 disengages the accelerating system. Once operating on a mainline track at around 125 mph (200 km/h), the vehicle 12 may coast and gradually decelerate to approximately 120 mph (190 km/ h) to match the speed of the propulsion segment assembly before engagement. In an embodiment, there may be a shock absorption system incorporated on the vehicle 12 (not shown) in order to reduce any of the effects of any jolts or other unwanted movements during an engagement. In an embodiment, vehicle 12 may include apparatus (described in more detail below) that modulates the force and speed of engagement of vehicle 12 with the accelerating system and/ or propulsion segment assembly. In an embodiment, the modulation of the force and speed of engagement is used to minimize the magnitude of acceleration and the rate of change of acceleration (commonly known as the "jerk"), thus ensuring a smoother ride and minimizing discomfort and disruption to the passengers on vehicle 12.

The vehicle 12 may be operated with or without an attendant, but an attendant may be located at a load station. The attendant may perform services such as managing ticket sales, cleaning the vehicles and the load stations, and be available for emergency situations.

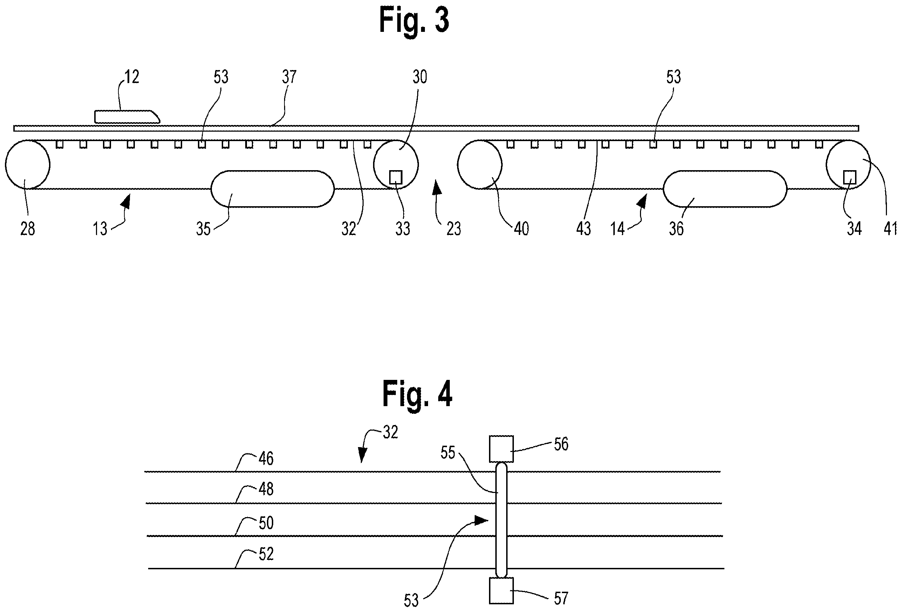

Referring now to FIG. 3, there is shown a side view of a propulsion segment assembly 13 for the transportation system 10 according to an embodiment. The propulsion segment assembly 13 includes a cable assembly 32 that is looped continuously between a propulsion cylinder 30 and a free cylinder 28. The cable assembly 32 is located below the rail tracks 37 so as to connect to and propel a vehicle 12.

Also shown in FIG. 3 is a propulsion segment assembly 14 that includes cable assembly 43 that is looped continuously between a propulsion cylinder 41 and a free cylinder 40. A segment transition zone 23 is shown between the propulsion segment assembly 13 and the propulsion segment assembly 14. The propulsion segment assembly 13 may include a motor 33 that powers the propulsion cylinder 30. The propulsion segment assembly 13 may also include a tensioner 35 for reducing or eliminating the slack in the cable assembly 32 due to load and temperature variations or other reasons. Similarly, the propulsion segment assembly 14 may include a motor 34 that powers the propulsion cylinder 41 and a tensioner 36 for reducing or eliminating the slack in the cable assembly 43.

In operation, a vehicle 12 is propelled on the tracks 37 by attachment to the cable assembly 32 until it reaches the end of the segment at the propulsion cylinder 30. At this point, the vehicle 12 disengages from the cable assembly 32 and coasts along the tracks 37 until engaging with a cable assembly 43. The vehicle 12 is propelled continuously and seamlessly by the cable assembly 43 until reaching the end of the segment at the propulsion cylinder 41 where it either transitions to the next segment/ propulsion assembly or switching to a station track to stop at a load station. In other embodiments, the vehicle 12 may also switch off of the cable assembly 32 at any point along the route, including at any point along a segment.

In an embodiment, the motor 33, and similarly the motor 34, may provide an output power of approximately 1,500 horsepower (1,100 kW). In an embodiment, the motor 33 is designed to drive the propulsion cylinder 30 at a constant peripheral speed of approximately 120 mph (190 km/h). The motor 33 may also include a variable speed drive or controller that allows necessary adjustments of power supplied to the propulsion cylinder 30 as the propulsion cylinder 30 and/or the cylinder 28 wear. Further, the motor 33 may power the propulsion cylinder 30 at slower speeds in order to perform maintenance operations to the propulsion assembly 13 or other components. To reduce power consumption, the motor may also be turned off or operate at reduced speeds at times when it is known that no vehicles 12 will be engaging the propulsion segment for a known period of time.

In this example, each of the propulsion segment assemblies 13 and 14 will typically be propelling two of the vehicles 12 along at some point along the 5 mile (8 km) distance of segment assembly (for a total of four vehicles 12). When the rail transportation system 10 is constructed over a steep grade, the propulsion segment assemblies 13 and 14 may be shortened to a distance such as 2.5 miles (4 km) each so that the same 1,500 hp (1,120 kW) motor is now propelling only one vehicle 12 on the uphill portion of the grade, but still maintaining the desired speed of around 120 mph (190 km/h). Conversely, the propulsion segment assemblies 13 and 14 may be lengthened to a distance such as 10 or more miles (16 or more km) each on the downhill portion of the grade because less power is needed to propel vehicles 12 at the same speed of around 120 mph (190 km/ h). In an alternative embodiment, each of the propulsion segment assemblies may retain the same length of approximately 5 miles (8 km) regardless of the steepness of the grade, but the motors 33 and/ or 34 may be designed and rated for higher power outputs on uphill grades (e.g., 3,000 hp or 2,240 kW) and lower power outputs on downhill grades (e.g., 750 hp or 560 kW) to propel vehicles 12 at the same speed of around 120 mph (190 km/ h) on all grades. In other examples, the motor size and/ or power output may vary depending upon factors such as the speed of the propulsion segment assembly and the size of the vehicles being transported.

Conventional train systems typically cannot be constructed over such steep grades because the maximum slope on which a locomotive can pull a train is typically limited by the low coefficient of friction of steel wheels on a steel track. This coefficient of friction (and, thus, maximum slope) is further reduced when the rails are wet or covered with debris, such as leaves. In the above example, a conventional train system, therefore, would typically require a tunnel through the grade obstruction or extension of the tracks around the grade obstruction, thus significantly increasing the cost of the system. Further, because a conventional train is limited to a fixed maximum power output by its onboard motors or engines, it must either climb the grade at a lower speed because its motors are designed to use their maximum power output to maintain top speed on flat ground, or alternatively maintain high speeds when climbing uphill at the cost of motors that are oversized (and thus inefficient) for maintaining top speed on flat ground and downhill. Alternative solutions for steep-grade railways, such as gear-and-rack railways, are typically also limited to low speeds because they require continuous positive engagement and disengagement of gear teeth with the rack. By contrast, the present invention enables cost savings by allowing propulsion segment assemblies to follow more direct routes over steep terrain, and further allows vehicles 12 to maintain a constant top speed and high efficiency over varying grades by varying the lengths of propulsion segment assemblies, the power output of the propulsion segment assembly motors, or both.

Referring now to FIG. 4, the cable assembly 32 of FIG. 3 is shown in more detail. In an embodiment, the cable assembly 32 includes four cables (cable 46, cable 48, cable 50, and cable 52) all of which are connected to and powered by the propulsion cylinder 30. The cable support apparatus 53 may also include one or more support bars 55 that are attached to the cables 46, 48, 50, and 52. In an embodiment, support bars 55 are attached to cables 46, 48, 50, and 52 on the "outside", i.e., on the opposite sides of the cables to the sides that contact and wrap around propulsion cylinder 30 and free cylinder 28. Thus, support bars 55 do not interfere with the free movement of cables 46, 48, 50, and 52 around propulsion cylinder 30 and free cylinder 28. In an embodiment, support bars 55 are spaced such that the sag of cables 46, 48, 50 and 52 due to the force of gravity at each midpoint between support bars 55 does not exceed predetermined limits. Without support bars 55, the tension required on cables 46, 48, 50, and 52 to keep cable sag within acceptable limits would be very high and in longer propulsion segments, may even exceed the tensile strength limits of commonly-used cable materials, such as steel. Alternatives to support bars 55, such as pulleys or static cable guides might be used to keep cable sag within acceptable limits, but may cause excessive and rapid wear to the cables, guides, pulleys, and any bearings therein at the high cable speeds of 120 mph (190 km/h) or greater, and may further cause the cables to fail from fatigue due to the constant stresses of rapidly bending over pulleys or cable guides.

In an embodiment, the support bars 55 may be spaced every approximately 300 feet (90 m) along the cables 46, 48, 50, and 52. The cables 46, 48, 50 and 52 may comprise a 0.25 inch (6 mm) diameter cable that comprises steel or other suitable material that is strong and flexible. Under tension, the cables in this example may sag a maximum of 6 inches (15 cm) at the midpoints between support bars 55. In alternative embodiments, the support bars 55 may be spaced at longer or shorter intervals as needed to keep cable sag within a defined limit.

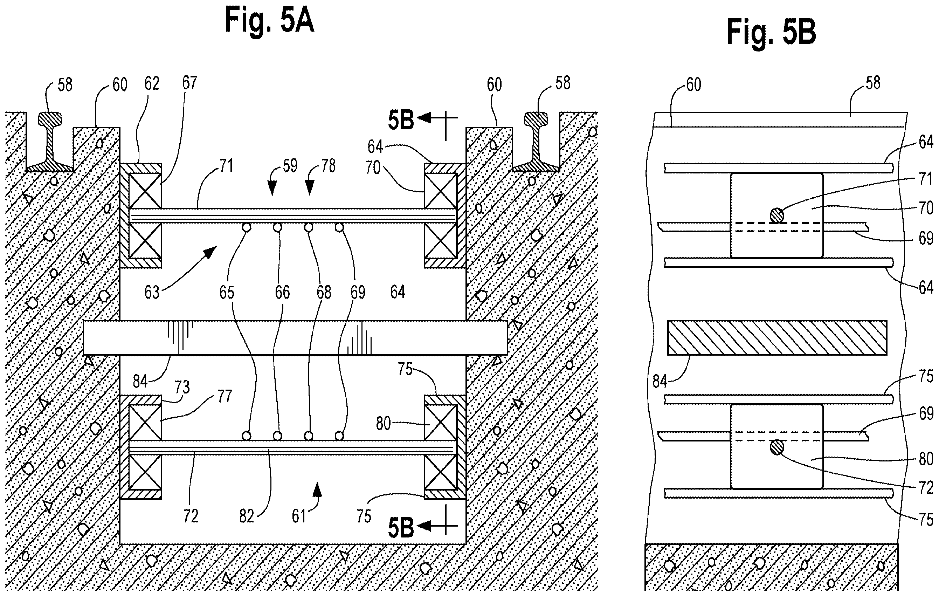

In an embodiment, cables 46, 48, 50, and 52 are effectively stationary relative to support bars 55, and thus support bars 55 support cables 46, 48, 50, and 52 without causing significant frictional wear on the cables. As a result, travel around the propulsion cylinder and the free cylinder provides the only significant source of friction to the cables 46, 48, 50, and 52. The support bar 55 may have a slider 56 and a slider 57 attached on opposite ends of the support bar 55 to allow the slide in channel guides 62, 64, 73, and 75 as shown in FIGS. 5A and 5B. In an embodiment, sliders 56 and 57 and channel guides 62, 64, 73, and 75 may comprise an ultra-high molecular weight polyethylene, fluorinated polymer, or other material that provides a low coefficient of sliding friction. In alternative embodiments, sliders 56 and 57 and channel guides 62, 64, 73, and 75 may use rails and/or wheels, rollers, ball bearings, fluid bearings, aerodynamic lift, or other types of bearings to reduce or eliminate sliding friction between sliders 56 and 57 and channel guides 62, 64, 73, and 75.

In an embodiment, the propulsion cylinder 30 and the cables 46,48, 50, and 52 are sized for minimal wear on each, where the ratio for the diameter of the propulsion cylinder 30 to each of the diameters of the cables 46, 48, 50, and 52 is at least approximately one hundred to one (100:1). In other embodiments, the cables 46, 48, 50, and 52 may comprise belts or chains, and size of the cables and propulsion cylinder may vary depending upon factors such as the speed of the system and the size of the vehicles being transported.

FIGS. 5A-B show rear and side cutaway views, respectively, of a support structure 60 for a cable support apparatus 61 in accordance with an embodiment. Generally, the support structure is designed to support rail tracks 58 and any passing vehicles 12, and includes an opening 78. The opening 78 is designed to contain a cable assembly 63 and cable support apparatuses 59 and 61. In an embodiment, opening 78 may have a width X of around 3 feet (0.9 m) and a depth Y of around 4 feet (1.2 m). In an embodiment, the support structure comprises concrete or other suitable material. In this embodiment, the rails 58 are located on top of the support structure 60 and may be secured in place by various means.

In an embodiment, large parts of support structure 60 may be prefabricated in a manufacturing facility and transported as a segment for installation at the railway site. For example, in an embodiment, the roughly U-shaped edge of support structure 60 attached to rails 58, channel guides 62, 64, 73, and 75, and tie bar 84 may be made of steel plate or sheet in approximately 100 foot (30 m) long sub-segments. Rails 58, channel guides 62, 64, 73, and 75 (with preinstalled cable support apparatuses 59 and 61), and tie bar 84 may be assembled and installed in each prefabricated sub-segment at the manufacturing facility. Each prefabricated sub-segment may then be transported to the railway site and installed in a previously constructed concrete foundation with a U-shaped channel. A propulsion cylinder 30 and free cylinder 28 may be installed at either end of a set of, for example, 264 contiguous sub-segments to create an approximately 5 mile (8 km) long propulsion segment. Finally, cables 46, 48, 50, and 52 may be attached to cable support apparatuses 59 and 61, wrapped around propulsion cylinder 30 and free cylinder 28, and the free ends of the cables connected to complete the propulsion segment.

By prefabricating most or all of support structure 60, expensive on-site track construction is greatly reduced and track reliability is enhanced because the sub-segments with preinstalled components are manufactured to defined specifications in a controlled environment. Further, the solid concrete foundation of support structure 60 requires much less maintenance than ballasted foundation track systems.

In an alternative embodiment, a self-supporting support structure 60 may be entirely prefabricated so that no concrete foundation is required. For example, support structure 60 may be made of steel and designed for use in an elevated track structure.

The cable support apparatus 59 includes a support bar 71 that is attached to cables 65, 66, 68, and 69. In an embodiment, each of the cables 65, 66, 68, and 69 comprise a loop that is oriented in a substantially vertical direction. The support bar 71 is substantially similar to the support bar 55 and the cables 65, 66, 68, and 69 are substantially similar to the cables 46, 48, 50, and 52.

The support bar 71 is also attached to a slider 67 and a slider 70 on opposite ends of the bar 71. A left channel guide 62 and a right channel guide 64 are attached to support structure 60. In an embodiment, the left channel guide 62 and the right channel guide 64 are C-shaped such that slider 67 and the slider 70 are designed to fit slidably within the guides 62 and 64. The opening may also include one or more tie bars 84 similar in function to a rail tie. Tie bar 84 may provide separation between the upper and lower runs of cables 65, 66, 68, and 69 as well as structural support to the U-shaped cross section of support structure 60.

A support bar 72 is attached to the cables 65, 66, 68 and 69, and is substantially similar to the support bar 71. Further, the cable support apparatus 61 is substantially similar to the cable support apparatus 59; a left channel guide 73 and a right channel guide 75 are substantially similar to the left channel guide 62 and the right channel guide 64, respectively; and a slider 77 and a slide 80 are substantially similar to the sliders 67 and 70.

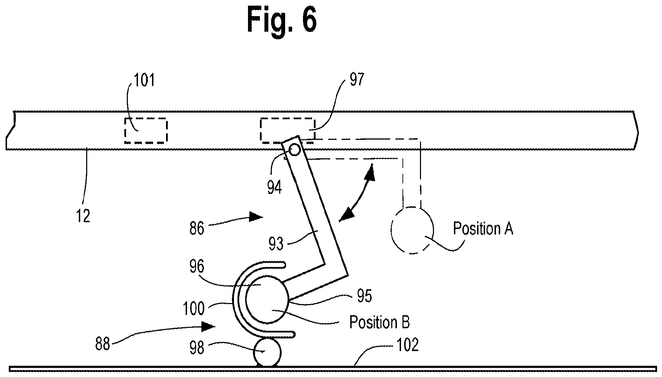

FIG. 6 shows a side cutaway view of a vehicle connector assembly 86 and a cable support apparatus 88 in accordance with an embodiment. The vehicle connector assembly 86 may include an L-shaped connecting arm 93 having a first end 94 that is movably connected to the vehicle 12 and having second end 95 that is connected to a connecting head 96. The cable support apparatus 88 may include a support bar 98 that is substantially similar to support bars 71 and is attached to a cable assembly 102. A vehicle connecting hook 100 may be C-shaped such that the lower end of the hook 100 is fixedly attached to the support bar 98.

In an embodiment, the vehicle connector assembly 88 may include an actuator 97 that is connected to the first end 94 of the L-shaped connecting arm 93. The actuator 97 is controlled by an electronic control system 101 and may comprise a hydraulic, a pneumatic, or an electric actuator.

In operation, the vehicle connector assembly 86 is designed to move selectively between Position A and Position B. When the vehicle connector assembly 86 is selectively positioned at a substantially horizontal position at Position A, the assembly 86 is not connected to the cable support apparatus 88. As a result, the cable support apparatus 88 is not providing any propulsion power to the vehicle 12, which then may coast or employ an internal source of power located onboard the vehicle 12.

When the vehicle connector assembly 86 is selectively positioned at a substantially vertical position at Position B, the assembly 86 may connect to the cable support apparatus 88 when the connecting head 96 engages frictionally the C-shaped vehicle connecting hook 100. As a result, the cable support apparatus 88 may provide propulsion power to the vehicle 12 when connected at the same speed without substantial shock load from sudden accelerations.

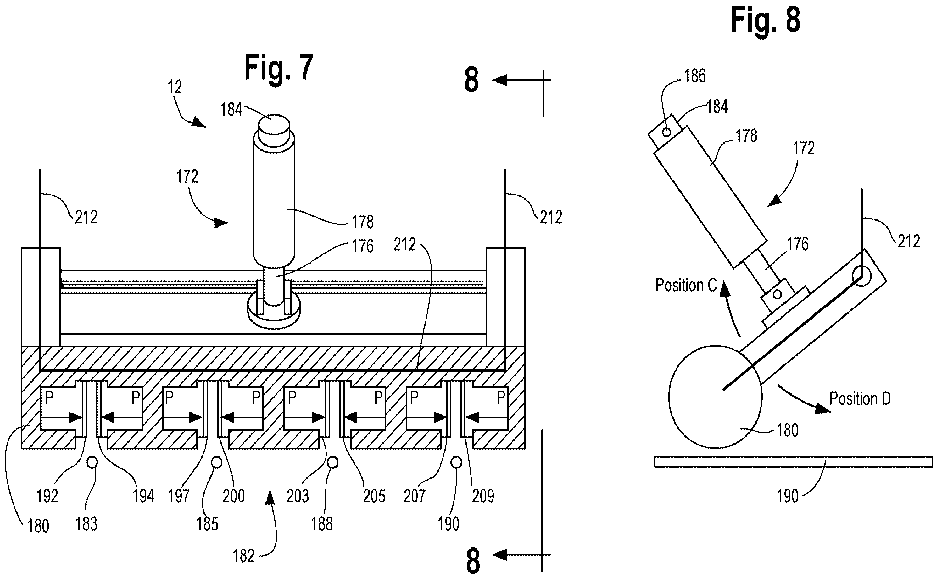

Referring now to FIG. 7, a rear cutaway view of a vehicle connector assembly 172 is shown in accordance with another embodiment. Vehicle connector assembly 172 may include a connecting arm 176 connected to a cable gripping apparatus 180. A fluid reservoir 178 may be connected to the vehicle connector assembly 172 for selectively providing a hydraulic fluid to the cable gripping apparatus 180 through a fluid line 212. The cable gripping apparatus 180 may include a series of four pairs of grippers such as left gripper 192 and right gripper 194, which are substantially similar to left gripper 197 and right gripper 200, left gripper 203, and right gripper 205, and left gripper 207 and right gripper 209, respectively. Left gripper 192 and right gripper 194 are designed to selectively close in order to engage frictionally cable 183, which along with cable 185, cable 188, and cable 190, are components of cable assembly 182.

FIG. 8 is a side cutaway view of the vehicle connector assembly 172 of FIG. 7 in further detail regarding when the assembly is moved between a Position C and a Position D. The connecting arm 176 may include a rotating connector 184 having an opening 186 located at one end. The rotating connector 184 may be connected rotatably to a support assembly on the vehicle 12. When the cable gripping apparatus 180 is raised to Position C, the vehicle will coast or employ onboard power. When the cable gripping apparatus 180 is lowered to Position D, the left gripper 192 and the right gripper 194 are positioned on opposite sides of the cable 183 in order to engage the cable 183. Similarly, the other gripper pairs 197/200, 203/205, and 207/209 are positioned around and selectively frictionally engage the respective corresponding cables 185, 188, and 190 and provide propulsion to the vehicle 12.

In an embodiment, cable gripping apparatus 180 modulates the force and speed of engagement with the cables to minimize the magnitude of acceleration and the rate of change of acceleration (jerk), thus ensuring a smooth ride and minimizing discomfort and disruption to the passengers on vehicle 12. Human factors research has determined that most people are able to stand and walk stably and comfortably when acceleration does not exceed 2 ft/ s² (0.6 m/ s²) and jerk does not exceed 2 ft/s³ (0.6 m/s³). Thus, cable gripping apparatus 180 must gradually grip the cables so that vehicle reaches a maximum acceleration of 2 ft/ s² (0.6 m/ s²) over a time period of at least one second (maximum jerk of 2 ft/ s³ = 2 ft/ s² / 1 s).

Acceleration and jerk must be kept within defined limits when vehicle 12 engages and disengages the cables; for example, when vehicle 12 first engages the cables of an accelerating system to accelerate up to speed, when vehicle 12 transitions from the accelerating system to a propulsion segment assembly by disengaging the cables of the accelerating system, coasting until it reaches the propulsion segment assembly, and then engaging the cables of propulsion segment assembly, or when vehicle 12 transitions between propulsion segment assemblies 13 and 14 by disengaging the cables of propulsion segment assembly 13, coasting until it reaches propulsion segment assembly 14, and then engaging the cables of propulsion segment assembly 14. In an embodiment, the extension of vehicle connector assembly 172 into Position D (the lower position) to engage the cables actuates a solenoid-operated variable-position valve connected to hydraulic fluid line 212 to gradually supply pressure to gripping apparatus 180, thereby causing gripper pairs 192/194, 197/200, 203/205, and 207/209 to gradually frictionally engage the respective corresponding cables 183, 185, 188, and 190. The position of the solenoid-operated valve, and thus the pressure applied to the cables by gripping apparatus 180, may be modulated by an open-loop control system, e.g., a timer calibrated to open the valve on a predetermined schedule that produces acceptable acceleration and jerk values, or by a closed-loop control system that monitors the current values of acceleration and jerk and adjusts the hydraulic pressure accordingly to produce acceptable acceleration and jerk values. In one or more embodiments, a sensor is provided that detects support bars 55 and ensures that gripping apparatus 180 engages cables 183, 185, 188, and 190 between adjacent support bars 55.

In an embodiment, as vehicle 12 nears the end of propulsion segment assembly 13, a switch on the track commands gripping apparatus 180 to release the cables and vehicle connector assembly 172 to retract to Position C (the upper position). Vehicle 12 then coasts to the start of propulsion segment assembly 14 (which in one embodiment may be approximately 200 feet or 60 m), where a second switch on the track commands vehicle connector assembly 172 to extend to Position D and gripping apparatus 180 to frictionally engage the cables as described above. During the approximately 200 feet (60 m) that vehicle 12 coasts, it may decelerate by approximately 0.5 to 1 mph (0.8 to 1.6 km/h), and thus gripping apparatus 180 must gradually engage the cables as described above to keep the acceleration and jerk values within the defined limits while ensuring that gripping apparatus 180 does not contact any support bars 55.

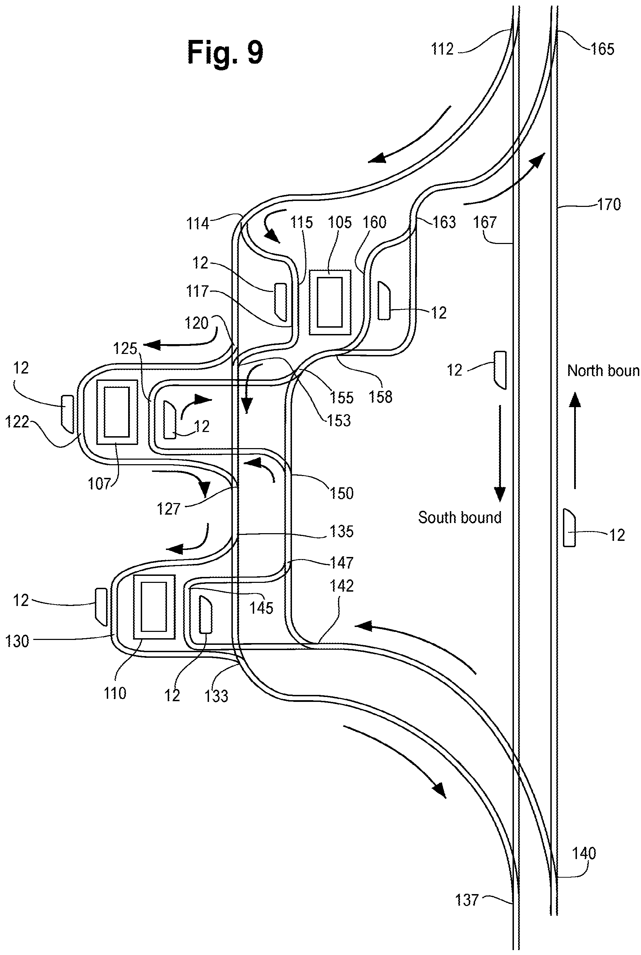

Referring now to FIG. 9, a top diagrammatic view of multiple stations is shown in accordance with an embodiment of the transportation system of FIG. 1. Each of the stations 105, 107, and 110 are connected by station tracks to mainline tracks 167 and 170. As shown in this example, vehicles 12 travel at high speeds on mainline track 167 in a southbound direction and at high speeds on mainline track 170 in a northbound direction. On the mainline tracks 167 and 170, the vehicles 12 are being propelled by a propulsion segment assembly 13 such as shown in FIG. 1. Any vehicles 12 on the southbound mainline track 167 can operate independently from other vehicles 12 on the southbound mainline track 167 as well as from any vehicles that are operating on the northbound mainline track 170.

A vehicle 12 that is traveling southbound on mainline track 167 and is programmed to stop at station 105 would exit the mainline track 167 at track point 112. The vehicle 12 would coast on a coasting track to track point 114 and switch tracks to a station track and proceed to track point 115 located at the station 105. The vehicle 12 may coast a total distance of approximately two miles (3 km) from the mainline track 167 to station 105. By coasting from the mainline track to a station, vehicle 12 conserves energy that would otherwise be used to maintain vehicle 12 at constant speed along the station track, then wasted by abruptly braking vehicle 12 as it pulls into the station. In an embodiment, vehicle 12 may additionally employ regenerative braking to generate and store power for reuse to further conserve energy that would otherwise be wasted by friction braking.

Station 105 may be the same, higher, or lower in elevation than the coasting track at track point 114. To allow vehicles 12 leaving a station 105 to accelerate to match the speed of the mainline tracks, a separate vehicle accelerating propulsion system is provided (as described above) that accelerates a vehicle 12 leaving station 105 from zero or low speed (the 10-20 mph or 16-32 km/h speed of vehicle 12 traveling under its own power with motor 39) up to around 125 mph (200 km/ h) in order to seamlessly couple with a mainline vehicle propulsion system. The accelerating system may separate from or be integrated with a coasting segment, depending on the configuration and layout of the track and station (e.g., in one embodiment the accelerating system requires a straight track segment so it can be only be integrated in with straight coasting segments). For example, straight segments between track point 153 and track point 133 and between track point 142 to 155 may each include a vehicle accelerating propulsion system. The vehicle accelerating propulsion system normally remains at the zero or low speed. Once vehicle 12 engages the vehicle accelerating propulsion system, the accelerating system accelerates itself and vehicle 12 up to approximately 125 mph (200 km/h). As with the cable gripping apparatus discussed above, the vehicle accelerating propulsion system may be designed not to exceed defined maximum limits of acceleration (e.g., 2 ft/s² or 0.6 m/ s²) and jerk (e.g., 2 ft/s³ or 0.6 m/ s³). The vehicle accelerating propulsion system then slows to its prior zero or low speed after vehicle 12 disengages the vehicle accelerating propulsion system.

All of the tracks (i.e., rails) themselves are substantially identical in structure but are identified as either coasting/ self-powered, accelerating, mainline, or station in order to more clearly describe how the vehicle is being propelled (e.g., coasting/ self-powered, accelerating, traveling at mainline speed) or the vehicle's location (e.g., near a station).

At station 105, passengers and cargo may be loaded and unloaded. When ready to proceed, the vehicle 12 leaves the station 105 and travels under its own power on the coasting/ self-powered track towards track point 153 using its onboard motor 39 until switching onto the vehicle accelerating propulsion system on an accelerating track at track point 153. The vehicle 12 may continue to accelerate to mainline speed, switching back onto the mainline track 167 at track point 137, and proceeding to its next station.

Similarly, a vehicle 12 that is traveling southbound on mainline track 167 and is programmed to stop at station 107 would also exit the mainline track 167 at track point 112. The vehicle 12 would coast on a coasting/ self-powered track to track point 120 and switch to a station track and proceed to track point 122 located at the station 107. The vehicle may coast a total distance of approximately two miles (3 km) from the mainline track 167 to station 107, or, if necessary, may travel an additional distance under self-power. As discussed above, vehicle 12 may conserve energy by coasting and/ or by using regenerative braking.

At station 107, passengers and cargo may be loaded and unloaded. When ready to proceed, the vehicle 12 leaves the station 107 and travels under its own power on the coasting/ self-powered track towards track point 127 using its onboard motor 39 until switching onto the vehicle accelerating propulsion system on an accelerating track at track point 127. The vehicle 12 may continue to accelerate to mainline speed, switching back onto the mainline track 167 at track point 137, and proceeding to its next station.

Similarly, a vehicle 12 that is traveling southbound on mainline track 167 and is programmed to stop at station 110 would also exit the mainline track 167 at track point 112. The vehicle 12 would coast on a coasting/ self-powered track to track point 135 and switch tracks to a station track and proceed to track point 130 located at the station 107. The vehicle may coast a total distance of approximately two miles (3 km) from the mainline track 167 to station 110. As discussed above, vehicle 12 may conserve energy by coasting and/ or by using regenerative braking.

At station 110, passengers and cargo may be loaded and unloaded. When ready to proceed, the vehicle 12 leaves the station 110 and travels under its own power on the coasting/ self-powered track towards track point 130 using its onboard motor 39 until switching onto the vehicle accelerating propulsion system on an accelerating track between track point 130 and track point 133, where it is accelerated to a speed above the mainline speed. The vehicle 12 may continue to coast along the coasting/ self-powered track between track points 133 and 137, switching back onto the mainline track 167 at track point 137, and proceeding to its next station.

A vehicle 12 that is traveling northbound on mainline track 170 and is programmed to stop at station 110 would exit the mainline track 170 at track point 140. The vehicle 12 would coast on a coasting/ self-powered track to track point 142 and switch tracks to a station track and proceed to track point 145 located at the station 110. The vehicle 12 may coast a total distance of approximately two miles (3 km) from the mainline track 170 to station 110. As discussed above, vehicle 12 may conserve energy by coasting and/ or by using regenerative braking.

At station 110, passengers and cargo may be loaded and unloaded. When ready to proceed, the vehicle 12 leaves the station 110 proceeds under its own power on the coasting/ self-powered track towards track point 147 using its onboard motor 39 until switching onto the vehicle accelerating propulsion system on an accelerating track at track point 147. After being accelerated to above mainline speed by the vehicle accelerating propulsion system, vehicle 12 may coast along the coasting/ self-powered track between track point 155 and track point 165 until switching back onto the mainline track 170 at track point 165 and proceeding to its next station.

Similarly, a vehicle 12 that is traveling northbound on mainline track 170 and is programmed to stop at station 107 would also exit the mainline track 170 at track point 140. The vehicle 12 would coast on a coasting/ self-powered track to track point 150 and switch tracks to a station track and proceed to track point 125 located at the station 107. The vehicle may coast a total distance of approximately two miles (3 km) from the mainline track 170 to station 107. As discussed above, vehicle 12 may conserve energy by coasting and/ or by using regenerative braking.

At station 107, passengers and cargo may be loaded and unloaded. When ready to proceed, the vehicle 12 leaves the station 107 and proceeds on the coasting/ self-powered track towards track point 155 using its onboard motor 39 until switching onto a vehicle accelerating propulsion system on an accelerating track between track point 125 and track point 155. After being accelerated to above mainline speed by the vehicle accelerating propulsion system, vehicle 12 may coast along coasting/ self-powered track from track point 155 to track point 165, switching back onto the mainline track 170 at track point 165, and proceeding to its next station.

In this embodiment, there are sections of coasting/ self-powered track with which an accelerating propulsion system has been integrated and where a vehicle 12 may be coasting or accelerating depending upon which station the vehicle 12 is proceeding towards or away from. For example, an accelerating propulsion system may be integrated with the portion of coasting/ self-powered segment between track point 153 and track point 135. In such an embodiment, the section of southbound coasting/ self-powered/ accelerating track section from track point 153 to track point 135 may be used as a coasting track for vehicles 12 that are traveling to station 110. The same section of southbound coasting/ self-powered/ accelerating track from track point 153 to track point 135 may be used as an accelerating track for vehicles 12 that are traveling from station 105 and back to the mainline 167. The vehicle accelerating propulsion system would not engage a vehicle 12 that is traveling from track point 153 to track point 135 as the vehicle 12 is coasting to station 110, but would engage the vehicle 12 that is departing from station 105 and traveling back to the mainline track 167.

Similarly, an acceleration propulsion system may be integrated with the straight section of northbound coasting/ self-powered segment between track point 147 and track point 155. In such an embodiment, the section of northbound coasting/ self-powered/ accelerating track from track point 147 to track point 155 may be used as a coasting track for vehicles 12 that are traveling to station 105. The same section of northbound coasting/ self-powered/ accelerating track from track point 147 to track point 155 may be used as an accelerating track for vehicles 12 that are traveling from station 110 and back to the mainline 170.

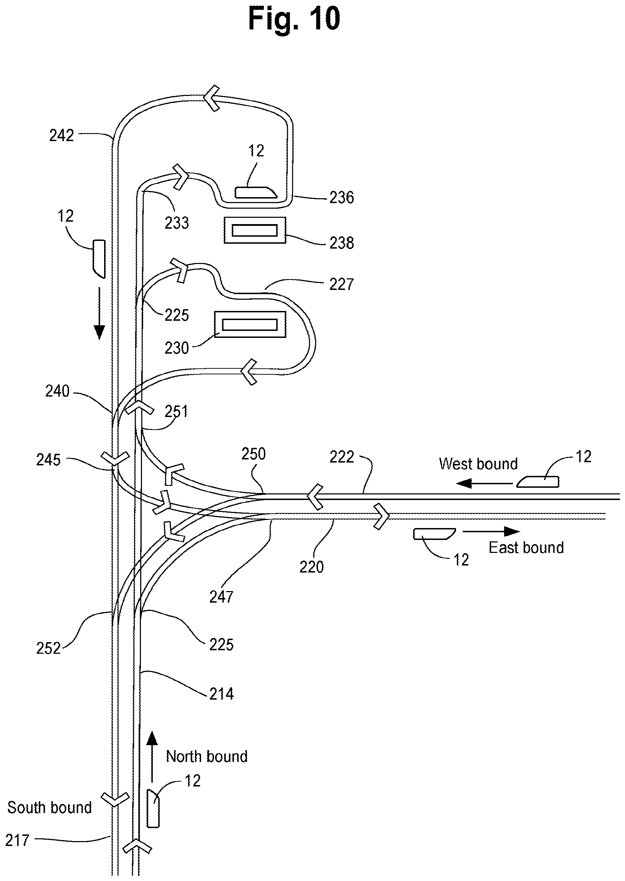

Referring now to FIG. 10, a top diagrammatic view of multiple stations and tracks is shown in accordance with another embodiment of the transportation system of FIG. 1. Each of the stations 230 and 238 are connected by coasting/ self-powered and accelerating tracks to mainline tracks 214, 217, 220, and 222. As shown in this example, vehicles 12 travel at high speeds on mainline track 214 in a northbound direction and at high speeds on mainline track 217 in a southbound direction. In addition, vehicles 12 travel at high speeds on mainline track 220 in an eastbound direction and at high speeds on mainline track 222 in a westbound direction.

In this embodiment, a vehicle 12 that is traveling northbound on mainline track 214 is programmed to stop at station 230 and then return by traveling southbound on mainline track 217. While traveling northbound, the vehicle 12 would exit the northbound mainline track 214 at track point 225 and coast on a coasting/ self-powered track to track point 227 located at the station 230. At station 230, passengers and cargo may be loaded and unloaded. When ready to proceed southbound, the vehicle 12 leaves the station 230 under its own power and accelerates on an accelerating track located at a straight portion of the coasting/ self-powered track between track point 227 and track point 240 towards track point 240 to switch back onto the southbound mainline track 217.

Similarly, a vehicle 12 that is traveling northbound on mainline track 214 is programmed to stop at station 238 and then return by traveling southbound on mainline track 217. While traveling northbound, the vehicle 12 would exit the northbound mainline track 214 at track point 233 and coast on a coasting/ self-powered track to track point 236 located at the station 238. At station 238, passengers and cargo may be loaded and unloaded. When ready to proceed southbound, the vehicle 12 leaves the station 238 under its own power and accelerates on an accelerating track located at a straight portion of the coasting/ self-powered track between track point 236 and track point 242 towards track point 242 to switch back onto the southbound mainline track 217.

A vehicle 12 that is proceeding northbound on mainline track 214 may switch onto a coasting/ self-powered track at track point 225 and coast to the eastbound mainline track 220 at track point 247. If the northbound mainline track 214 and the eastbound mainline track 220 are in close proximity to each other, the vehicle 12 may engage a propulsion segment assembly located on eastbound mainline track 220 with minimal speed differential. In another embodiment for greater distances, a propulsion assembly may be located at a straight portion between track point 225 and track point 247 to provide additional impetus to propel the vehicle 12 from the northbound mainline track 214 to the eastbound mainline track 220.

Similarly, a vehicle 12 that is proceeding southbound on mainline track 217 may switch onto a coasting/ self-powered track at track point 245 and coast to the eastbound mainline track 220 at track point 247. Because the southbound mainline track 217 and the eastbound mainline track 220 are in close proximity to each other, the vehicle 12 may engage a propulsion segment assembly located on eastbound mainline track 220 with minimal speed differential. In another embodiment for greater distances, a propulsion assembly may be located at a straight portion between track point 245 and track point 247 to provide additional impetus to propel the vehicle 12 from the southbound mainline track 217 to the eastbound mainline track 220.

Similarly, a vehicle 12 that is proceeding westbound on mainline track 222 may switch onto a coasting/ self-powered track at track point 250 and coast to the southbound mainline track 217 at track point 252. Because the westbound mainline track 222 and the southbound mainline track 217 are in close proximity to each other, the vehicle 12 may engage a propulsion segment assembly 13 located on southbound mainline track 217 with minimal speed differential. In another embodiment for greater distances, a propulsion assembly may be located at a straight portion between track point 250 and track point 252 to provide additional impetus to propel the vehicle 12 from the westbound mainline track 222 to the southbound mainline track 217.

And likewise, a vehicle 12 that is proceeding westbound on mainline track 222 may switch onto a coasting/ self-powered track at track point 250 and coast to the northbound mainline track 214 at track point 251. Because the westbound mainline track 222 and the northbound mainline track 214 are in close proximity to each other, the vehicle 12 may engage a propulsion segment assembly 13 located on northbound mainline track 214 with minimal speed differential. In another embodiment for greater distances, a propulsion assembly may be located at a straight portion between track point 250 and track point 251 to provide additional impetus to propel the vehicle 12 from the westbound mainline track 222 to the northbound mainline track 214.

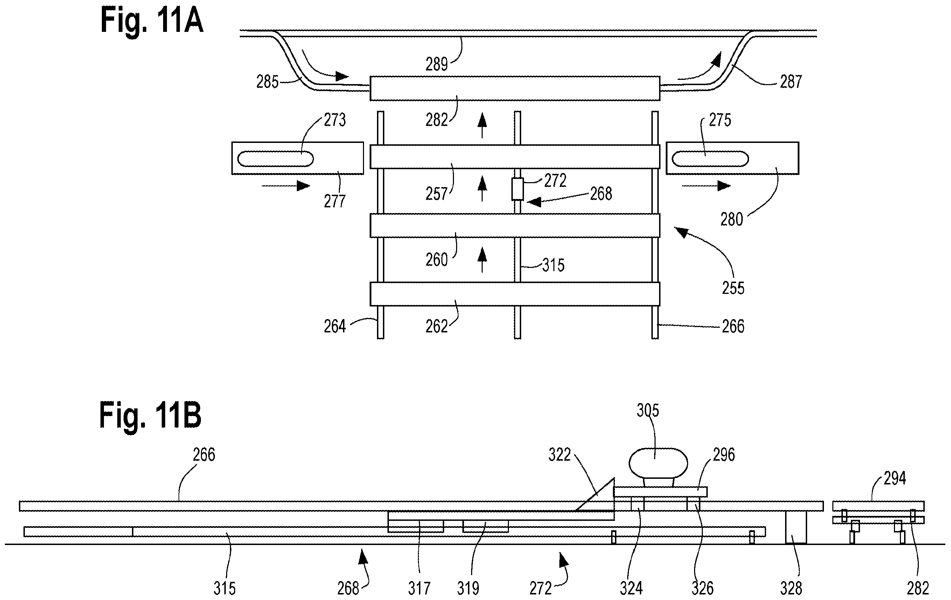

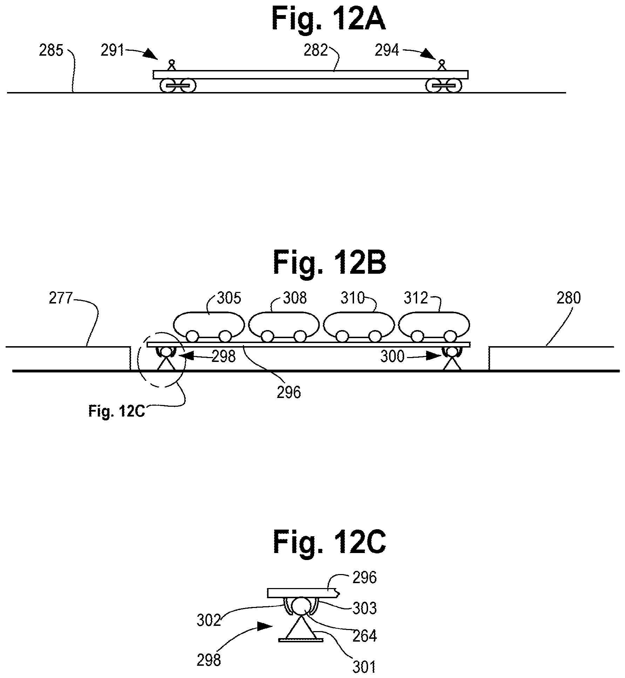

Referring now to FIGS. 11A-B and FIGS. 12A-C, FIG. 11A is a top view and FIG. 11B is a side view of a road vehicle loading system 255 in an embodiment of the transportation system of FIG. 1. FIG. 12A is a side view of the cargo transport vehicle of FIGS. 11A-B, and FIGS. 12B-C are side views of the road vehicle transport platform of FIGS. 11A-B. The loading system 255 may include a transport platform advancing system 268 for moving a series of road vehicle transport platforms 257, 260 and 262 over transport platform rails 264 and 266 to couple with a cargo transport vehicle 282. Each of the road vehicles 273 and 275 may comprise an automobile, a van, a truck, or any other vehicle that may be transported on the road vehicle transport platform 257 on the rail transportation system 10.

Road vehicle 273 is shown on a loading ramp 277 and has been driven under its own power onto the loading ramp 277 before proceeding onto the road vehicle transport platform 257. The transport advancing system 268 may include a platform advancing apparatus 272, a platform advancing screw 315, and rails 264 and 266. In operation, the platform advancing system 268 propels the road vehicle transport platform 257 along the rails 264 and 266.

In an embodiment, the platform advancing apparatus 272 may include a platform advancing screw 315, a pair of platform advancing threaded nuts 317 and 319, a header 322, a pair of platform guide 324 and 326, and a rail support 328. In operation, as the screw 315 is turned, the threaded nuts 317 and 319 advance along the screw 315 and the header 322 towards or away from a cargo transport vehicle 282 located in between coasting/ accelerating tracks 285 and 287. In this way, the header 322 may push or pull a road vehicle transport platform 296 onto the cargo transport vehicle 282 having the rail vehicle platform support assemblies 291 and 294. In other embodiments, the platform advancing apparatus 272 may comprise a hydraulic or electrical system for moving the road vehicle transport platform 296.

Another road vehicle transport platform 296 is shown in FIGS. 12A-C as being supported by ground platform support assemblies 298 and 300. The ground platform support assembly 298 may include rail supports 301 supporting a rail 264. The rail 264 is partially enclosed and guided by platform guides 302 and 303. In operation in a loading mode, once a road vehicle transport platform 296 is loaded with road vehicles 305, 308, 310, and 312, the road vehicle transport platform 296 may be propelled onto a cargo transport vehicle 282 having a pair of rail vehicle platform support assemblies 291 and 294. The cargo transport vehicle 282 may then proceed and accelerate on the coasting/ accelerating track 287 until transitioning to a mainline track 289.

The road vehicle loading system 255 may also operate in an unloading mode. In this mode, the cargo transport vehicle 282 may be transporting a road vehicle transport platform 296 that is transporting several road vehicles 305, 308, 310, and 312, may exit the mainline track 289 and coast on coasting/ accelerating track 285 until reaching the road vehicle loading system 255. There, the transport platform advancing system 268 operates to the pull road vehicle transport platform 296 off the cargo transport vehicle 282 and propel the road vehicle transport platform 296 until being aligned with an unloading ramp 280. The road vehicles 305, 308, 310, and 312 may be off-loaded from the road vehicle transport platform 296 onto the loading ramp 280, where the vehicles may proceed independently under each vehicle's power to a destination such as a home or office. In operation, the road vehicles 305, 308, 310, and 312 may be controlled and moved by the individual driver of each vehicle.

Although the invention has been described with reference to the above examples, it will be understood that many modifications and variations are contemplated within the scope of the claims. Therefore, it is to be understood that the invention shall not be limited to the specific embodiments disclosed and that modifications and other embodiments are intended and contemplated to be included within the scope of the appended claims. Although specific terms are employed herein, they are used in a generic and descriptive sense only and not for purposes of limitation.

## Claims

1. A rail transportation system (10) for moving a vehicle (12) along a continuous track (37, 58,167, 170, 214, 217, 220, 222, 289), comprising:
a plurality of adjacent propulsion segment assemblies (13, 14, 15), each of which provides propulsion along a segment of said track (37, 58, 167, 170, 214, 217, 220, 222, 289); and
a vehicle (12) for traveling along said continuous track (37, 58, 167, 170, 214, 217, 220, 222, 289),
wherein at least one of said propulsion segment assemblies (13, 14, 15) comprises a propulsion cylinder (30, 41), a free cylinder (28, 40), and a cable assembly (32, 43, 63, 102, 182) movably connected to the propulsion cylinder (30, 41) and the free cylinder (28, 40),
wherein the cable assembly (32, 43, 63, 102) of at least one of said propulsion segment assemblies (13, 14, 15) comprises a cable support apparatus (53, 59, 61, 88), and
**characterized in that** the cable support apparatus (53, 59, 61, 88) comprises a support bar (55, 71, 72, 98) and at least one slider (56, 57, 67, 70, 77, 80).

2. The rail transportation system (10) of claim 1, wherein the propulsion cylinder (30, 41) of at least one of said propulsion segment assemblies (13, 14, 15) comprises an electric motor (33, 34).

3. The rail transportation system (10) of claim 1, wherein at least one of said propulsion segment assemblies (13, 14, 15) further comprises a cable tensioner (35, 36).

4. The rail transportation system (10) of claim 1, wherein the cable assembly (32, 43, 63,102, 182) of at least one of said propulsion segment assemblies (13, 14, 15) further comprises at least one cable (46, 48, 50, 52, 65, 66, 68, 69, 183, 185, 188, 190).

5. The rail transportation system (10) of claim 1, wherein the vehicle (12) comprises a vehicle connector assembly (86,172) comprising a movable connecting arm (93, 176).

6. The rail transportation system (10) of claim 5, wherein the movable connecting arm (93) comprises a vehicle connecting hook (100).

7. The rail transportation system (10) of claim 6, wherein the vehicle connecting hook (100) is configured to:
selectively engage a first of said propulsion segment assemblies (13, 14, 15),
selectively disengage the first of said propulsion segment assemblies (13, 14, 15), and
selectively engage a second of said propulsion segment assemblies (13, 14, 15).

8. The rail transportation system (10) of claim 5, wherein the movable connecting arm (176) comprises a gripping apparatus (180).

9. The rail transportation system (10) of claim 8, wherein the gripping apparatus (180) is configured to:
selectively frictionally engage a first of said propulsion segment assemblies (13, 14,15),
selectively disengage the first of said propulsion segment assemblies (13, 14, 15), and
selectively frictionally engage a second of said propulsion segment assemblies (13, 14, 15).

10. The rail transportation system (10) of claim 9, wherein the gripping apparatus (180) is configured to frictionally engage each of said propulsion segment assemblies (13, 14, 15) with a variable amount of force.

11. The rail transportation system (10) of claim 9, wherein the gripping apparatus (180) is configured to frictionally engage each of said propulsion segment assemblies (13, 14, 15) with a progressively increasing amount of force.

12. The rail transportation system (10) of claim 1, wherein the vehicle (12) further comprises an electrical generator (38).

13. The rail transportation system (10) of claim 1, wherein the vehicle (12) further comprises a rail car.

14. The rail transportation system (10) of claim 1, wherein the vehicle (12) further comprises a cargo transport vehicle (282).

15. The rail transportation system (10) of claim 14, further comprising a load station (17, 18, 19, 20, 105, 107, 110, 230, 238).

16. The rail transportation system (10) of claim 15, wherein the load station further comprises a transport platform advancing system (268) for moving a road vehicle transport platform (257, 260, 262, 296) to couple with the cargo transport vehicle (282).

17. The rail transportation system (10) of claim 1, wherein the slider (56, 57, 67, 70, 77, 80) comprises a plain bearing.

18. The rail transportation system (10) of claim 1, wherein the slider (56, 57, 67, 70, 77, 80) comprises a rolling-element bearing.

19. The rail transportation system (10) of claim 1,
wherein the vehicle (12) comprises a vehicle connector assembly (86, 172) comprising a movable cable gripping apparatus (180), and
wherein the cable gripping apparatus (180) is configured to selectively frictionally engage the cable assembly (32, 43, 63, 102, 182) of a first of said propulsion segment assemblies (13, 14, 15),
selectively disengage the cable assembly (32, 43, 63, 102, 182) of the first of said propulsion segment assemblies (13, 14, 15), and
selectively frictionally engage the cable assembly (32, 43, 63, 102, 182) of a second of said propulsion segment assemblies (13, 14, 15).

20. A method for constructing a rail transportation system (10) comprising the steps of:
constructing a support structure (60) comprising a top surface, a first side wall, and a second side wall;
placing one or more rails (58) upon the top surface;
affixing a channel guide (62, 64, 73, 75) to either the first side wall or the second side wall;
installing a support bar (55, 71, 72, 98) and at least one slider (56, 57, 67, 70, 77, 80) in the channel guide (62, 64, 73, 75); and affixing one or more cables (46, 48, 50, 52, 65, 66, 68, 69,183,185,188,190) to the support bar (55, 71, 72, 98).

## Patentansprüche

1. Schienentransportsystem (10) zum Bewegen eines Fahrzeugs (12) entlang einer durchgehenden Schiene (37, 58, 167, 170, 214, 217, 220, 222, 289), umfassend:
eine Vielzahl von benachbarten Antriebssegmentbaugruppen (13, 14, 15), von denen jede einen Antrieb entlang eines Segments der Schiene (37, 58, 167, 170, 214, 217, 220, 222, 289) bereitstellt; und
ein Fahrzeug (12), das sich entlang der durchgehenden Schiene (37, 58, 167, 170, 214, 217, 220, 222, 289) bewegt,
wobei mindestens eine der Antriebssegmentbaugruppen (13, 14, 15) einen Antriebszylinder (30, 41), einen freien Zylinder (28, 40) und eine Kabelbaugruppe (32, 43, 63, 102, 182) umfasst, die beweglich mit dem Antriebszylinder (30, 41) und dem freien Zylinder (28, 40) verbunden ist,
wobei die Kabelbaugruppe (32, 43, 63, 102) von mindestens einer der Antriebssegmentbaugruppen (13, 14, 15) eine Kabeltragvorrichtung (53, 59, 61, 88) umfasst, und
**dadurch gekennzeichnet, dass** die Kabeltragvorrichtung (53, 59, 61, 88) eine Tragstange (55, 71, 72, 98) und mindestens einen Gleiter (56, 57, 67, 70, 77, 80) umfasst.

2. Schienentransportsystem (10) nach Anspruch 1, wobei der Antriebszylinder (30, 41) von mindestens einer der Antriebssegmentbaugruppen (13, 14, 15) einen Elektromotor (33, 34) umfasst.

3. Schienentransportsystem (10) nach Anspruch 1, wobei mindestens eine der Antriebssegmentbaugruppen (13, 14, 15) außerdem einen Kabelspanner (35, 36) umfasst.

4. Schienentransportsystem (10) nach Anspruch 1, wobei die Kabelbaugruppe (32, 43, 63, 102, 182) von mindestens einer der Antriebssegmentbaugruppen (13, 14, 15) ferner mindestens ein Kabel (46, 48, 50, 52, 65, 66, 68, 69, 183, 185, 188, 190) umfasst.

5. Schienentransportsystem (10) nach Anspruch 1, wobei das Fahrzeug (12) eine Fahrzeugverbindungsbaugruppe (86, 172) mit einem beweglichen Verbindungsarm (93, 176) umfasst.

6. Schienentransportsystem (10) nach Anspruch 5, wobei der bewegliche Verbindungsarm (93) einen Fahrzeugverbindungshaken (100) umfasst.

7. Schienentransportsystem (10) nach Anspruch 6, wobei der Fahrzeugverbindungshaken (100) so konfiguriert ist, dass er:
selektiv eine erste der genannten Antriebssegmentbaugruppen (13, 14, 15) in Eingriff nimmt,
die erste der genannten Antriebssegmentbaugruppen (13, 14, 15) selektiv auskuppelt, und
selektiv eine zweite der genannten Antriebssegmentbaugruppen (13, 14, 15) in Eingriff nimmt.

8. Schienentransportsystem (10) nach Anspruch 5, wobei der bewegliche Verbindungsarm (176) eine Greifvorrichtung (180) umfasst.

9. Schienentransportsystem (10) nach Anspruch 8, wobei die Greifvorrichtung (180) so konfiguriert ist, dass sie:
selektiv reibschlüssig eine erste der genannten Antriebssegmentbaugruppen (13, 14, 15) in Eingriff nimmt,
die erste der genannten Antriebssegmentbaugruppen (13, 14, 15) selektiv auskuppelt, und
selektiv reibschlüssig eine zweite der genannten Antriebssegmentbaugruppen (13, 14, 15) in Eingriff nimmt.

10. Schienentransportsystem (10) nach Anspruch 9, wobei die Greifvorrichtung (180) so konfiguriert ist, dass sie jede der Antriebssegmentbaugruppen (13, 14, 15) mit einem variablen Kraftbetrag reibschlüssig in Eingriff nimmt.

11. Schienentransportsystem (10) nach Anspruch 9, wobei die Greifvorrichtung (180) so konfiguriert ist, dass sie jede der Antriebssegmentbaugruppen (13, 14, 15) mit einem progressiv ansteigenden Kraftbetrag reibschlüssig in Eingriff nimmt.

12. Schienentransportsystem (10) nach Anspruch 1, wobei das Fahrzeug (12) ferner einen elektrischen Generator (38) umfasst.

13. Schienentransportsystem (10) nach Anspruch 1, wobei das Fahrzeug (12) ferner einen Eisenbahnwagen umfasst.

14. Schienentransportsystem (10) nach Anspruch 1, wobei das Fahrzeug (12) ferner ein Frachttransportfahrzeug (282) umfasst.

15. Schienentransportsystem (10) nach Anspruch 14 umfasst ferner eine Ladestation (17, 18, 19, 20, 105, 107, 110, 230, 238).

16. Schienentransportsystem (10) nach Anspruch 15, wobei die Ladestation ferner ein Transportplattform-Vorschubsystem (268) zum Bewegen einer Straßenfahrzeug-Transportplattform (257, 260, 262, 296) zum Koppeln mit dem Frachttransportfahrzeug (282) umfasst.

17. Schienentransportsystem (10) nach Anspruch 1, wobei der Gleiter (56, 57, 67, 70, 77, 80) ein Gleitlager umfasst.

18. Schienentransportsystem (10) nach Anspruch 1, wobei der Gleiter (56, 57, 67, 70, 77, 80) ein Wälzlager umfasst.

19. Schienentransportsystem (10) nach Anspruch 1,
wobei das Fahrzeug (12) eine Fahrzeugverbindungsbaugruppe (86, 172) umfasst, die eine bewegliche Kabelgreifvorrichtung (180) umfasst, und
wobei die Kabelgreifvorrichtung (180) so konfiguriert ist, dass sie selektiv reibschlüssig die Kabelbaugruppe (32, 43, 63, 102, 182) einer ersten der Antriebssegmentbaugruppen (13, 14, 15) in Eingriff nimmt,
die Kabelbaugruppe (32, 43, 63, 102, 182) der ersten der Antriebssegmentbaugruppen (13, 14, 15) selektiv auskuppelt, und
selektiv reibschlüssig die Kabelbaugruppe (32, 43, 63, 102, 182) einer zweiten der Antriebssegmentbaugruppen (13, 14, 15) in Eingriff nimmt.

20. Verfahren zum Bau eines Schienentransportsystems (10), das die folgenden Schritte umfasst:
Konstruktion einer Trägerstruktur (60) mit einer Oberseite, einer ersten Seitenwand und einer zweiten Seitenwand;
Anbringen einer oder mehrerer Schienen (58) auf der oberen Fläche;
Befestigen einer Kanalführung (62, 64, 73, 75) entweder an der ersten oder an der zweiten Seitenwand;
Einsetzen einer Tragstange (55, 71, 72, 98) und mindestens eines Gleiters (56, 57, 67, 70, 77, 80) in die Kanalführung (62, 64, 73, 75); und
Befestigen eines oder mehrerer Kabel (46, 48, 50, 52, 65, 66, 68, 69, 183, 185, 188, 190) an der Tragstange (55, 71, 72, 98).

## Revendications

1. Système de transport ferroviaire (10) pour déplacer un véhicule (12) le long d'une voie continue (37, 58, 167, 170, 214, 217, 220, 222, 289), comprenant :
une pluralité d'ensembles segments de propulsion (13, 14, 15) adjacents, dont chacun assure une propulsion le long d'un segment de ladite voie (37, 58, 167, 170, 214, 217, 220, 222, 289) ; et
un véhicule (12) destiné à se déplacer le long de ladite voie continue (37, 58, 167, 170, 214, 217, 220, 222, 289),
au moins l'un desdits ensembles segments de propulsion (13, 14, 15) comprenant un cylindre de propulsion (30, 41), un cylindre libre (28, 40), et un ensemble câble (32, 43, 63, 102, 182) relié de manière mobile au cylindre de propulsion (30, 41) et au cylindre libre (28, 40),
l'ensemble câble (32, 43, 63, 102) d'au moins l'un desdits ensembles segments de propulsion (13, 14, 15) comprenant un appareil de support de câble (53, 59, 61, 88), et
**caractérisé par le fait que** l'appareil de support de câble (53, 59, 61, 88) comprend une barre de support (55, 71, 72, 98) et au moins un coulisseau (56, 57, 67, 70, 77, 80).

2. Système de transport ferroviaire (10) selon la revendication 1, dans lequel le cylindre de propulsion (30, 41) d'au moins l'un desdits ensembles segments de propulsion (13, 14, 15) comprend un moteur électrique (33, 34) .

3. Système de transport ferroviaire (10) selon la revendication 1, dans lequel au moins l'un desdits ensembles segments de propulsion (13, 14, 15) comprend en outre un tendeur de câble (35, 36).

4. Système de transport ferroviaire (10) selon la revendication 1, dans lequel l'ensemble câble (32, 43, 63, 102, 182) d'au moins l'un desdits ensembles segments de propulsion (13, 14, 15) comprend en outre au moins un câble (46, 48, 50, 52, 65, 66, 68, 69, 183, 185, 188, 190).

5. Système de transport ferroviaire (10) selon la revendication 1, dans lequel le véhicule (12) comprend un ensemble connecteur de véhicule (86, 172) comprenant un bras de liaison mobile (93, 176).

6. Système de transport ferroviaire (10) selon la revendication 5, dans lequel le bras de liaison mobile (93) comprend un crochet de liaison de véhicule (100).

7. Système de transport ferroviaire (10) selon la revendication 6, dans lequel le crochet de liaison de véhicule (100) est configuré pour :
engager de manière sélective un premier desdits ensembles segments de propulsion (13, 14, 15),
désengager de manière sélective le premier desdits ensembles segments de propulsion (13, 14, 15), et
engager de manière sélective un second desdits ensembles segments de propulsion (13, 14, 15).

8. Système de transport ferroviaire (10) selon la revendication 5, dans lequel le bras de liaison mobile (176) comprend un appareil de saisie (180).

9. Système de transport ferroviaire (10) selon la revendication 8, dans lequel l'appareil de saisie (180) est configuré pour :
engager de manière sélective par frottement un premier desdits ensembles segments de propulsion (13, 14, 15),
désengager de manière sélective le premier desdits ensembles segments de propulsion (13, 14, 15), et
engager de manière sélective par frottement un second desdits ensembles segments de propulsion (13, 14, 15) .

10. Système de transport ferroviaire (10) selon la revendication 9, dans lequel l'appareil de saisie (180) est configuré pour engager par frottement chacun desdits ensembles segments de propulsion (13, 14, 15) avec une quantité de force variable.

11. Système de transport ferroviaire (10) selon la revendication 9, dans lequel l'appareil de saisie (180) est configuré pour engager par frottement chacun desdits ensembles segments de propulsion (13, 14, 15) avec une quantité de force augmentant progressivement.

12. Système de transport ferroviaire (10) selon la revendication 1, dans lequel le véhicule (12) comprend en outre un générateur électrique (38).

13. Système de transport ferroviaire (10) selon la revendication 1, dans lequel le véhicule (12) comprend en outre un wagon.

14. Système de transport ferroviaire (10) selon la revendication 1, dans lequel le véhicule (12) comprend en outre un véhicule de transport de marchandises (282).

15. Système de transport ferroviaire (10) selon la revendication 14, comprenant en outre un poste de chargement (17, 18, 19, 20, 105, 107, 110, 230, 238).

16. Système de transport ferroviaire (10) selon la revendication 15, dans lequel le poste de chargement comprend en outre un système d'avance de plate-forme de transport (268) pour déplacer une plate-forme de transport de véhicule routier (257, 260, 262, 296) de façon à l'accoupler au véhicule de transport de marchandises (282).

17. Système de transport ferroviaire (10) selon la revendication 1, dans lequel le coulisseau (56, 57, 67, 70, 77, 80) comprend un palier lisse.

18. Système de transport ferroviaire (10) selon la revendication 1, dans lequel le coulisseau (56, 57, 67, 70, 77, 80) comprend un palier à roulement.

19. Système de transport ferroviaire (10) selon la revendication 1,
dans lequel le véhicule (12) comprend un ensemble connecteur de véhicule (86, 172) comprenant un appareil de saisie de câble mobile (180), et
dans lequel l'appareil de préhension de câble (180) est configuré pour engager de manière sélective par frottement l'ensemble câble (32, 43, 63, 102, 182) d'un premier desdits ensembles segments de propulsion (13, 14, 15),
désengager de manière sélective l'ensemble câble (32, 43, 63, 102, 182) du premier desdits ensembles segments de propulsion (13, 14, 15), et
engager de manière sélective par frottement l'ensemble câble (32, 43, 63, 102, 182) d'un second desdits ensembles segments de propulsion (13, 14, 15).

20. Procédé de construction d'un système de transport ferroviaire (10) comprenant les étapes :
construire une structure de support (60) comprenant une surface supérieure, une première paroi latérale et une seconde paroi latérale ;
placer un ou plusieurs rails (58) sur la surface supérieure ;
fixer un guide de canal (62, 64, 73, 75) soit à la première paroi latérale, à sur la seconde paroi latérale ;
installer une barre de support (55, 71, 72, 98) et au moins un coulisseau (56, 57, 67, 70, 77, 80) dans le guide de canal (62, 64, 73, 75) ; et
fixer un ou plusieurs câbles (46, 48, 50, 52, 65, 66, 68, 69, 183, 185, 188, 190) à la barre de support (55, 71, 72, 98).
